# EUROPEAN PATENT APPLICATION

(11) **EP 4 704 167 A1**
(43) Date of publication of application: **04.03.2026**
(21) Application number: 24797024.7
(22) Date of filing: 23.04.2024
(51) Int. Cl.: H01M 4/13, H01M 4/36

(54) **POSITIVE ELECTRODE AND SECONDARY BATTERY**

(30) Priority: 28.04.2023 JP 2023074740
(71) Applicant: Panasonic Intellectual Property Management Co., Ltd., Kadoma-shi, Osaka 571-0057 (JP)
(72) Inventor: SHIRAKAMI Atsuro, Kadoma-shi, Osaka 571-0057 (JP)
(74) Representative: Novagraaf International SA
(86) International application number: PCT/JP2024/015948
(87) International publication number: WO 2024/225278

(57) **Abstract**

A positive electrode 10 according to the present disclosure includes first positive electrode active material particles 3, second positive electrode active material particles 4, and a phosphorus compound adhered to at least a portion of a surface of the first positive electrode active material particle 3. The first positive electrode active material particle 3 is a particle formed by agglomeration of 51 to 20,000 first primary particles. The second positive electrode active material particle 4 is one second primary particle or a particle formed by agglomeration of 2 to 50 of the second primary particles. A mass ratio of P contained in a phosphorus compound adhered to surfaces of the second positive electrode active material particles 4 to P contained in the phosphorus compound adhered to the surfaces of the first positive electrode active material particles 3 is 0 or more and 0.5 or less.

## Description

### TECHNICAL FIELD

The present disclosure relates to a positive electrode and a secondary battery.

### BACKGROUND ART

Conventional secondary batteries are known to undergo side reactions such as reduction and elution of transition metals contained in active materials as well as decomposition reactions of electrolyte solutions caused thereby. Such side reactions accelerate degradation of secondary batteries.

Known techniques for addressing issues of decomposition reactions of electrolyte solutions include, for example, the technique disclosed in Patent Literature 1. Patent Literature 1 describes a coated positive electrode active material having a coating including at least one selected from a specific phosphonic acid and a specific phosphorous triester.

### CITATION LIST

### Patent Literature

Patent Literature 1: WO 2017/126276

### SUMMARY OF INVENTION

### Technical Problem

However, coating the positive electrode active material as described above causes an increase in the internal resistance. That is, reducing an increase in the internal resistance caused by a configuration for suppressing side reactions is also one of the important issues. The present disclosure provides a positive electrode that can reduce an increase in the internal resistance of the battery while side reactions in the positive electrode can be suppressed.

### Solution to Problem

A positive electrode of the present disclosure includes:
first positive electrode active material particles;
second positive electrode active material particles; and
a phosphorus compound adhered to at least a portion of a surface of the first positive electrode active material particle, wherein
the first positive electrode active material particle is a particle formed by agglomeration of 51 to 20,000 first primary particles,
the second positive electrode active material particle is one second primary particle or a particle formed by agglomeration of 2 to 50 of the second primary particles, and
a mass ratio of P contained in a phosphorus compound adhered to surfaces of the second positive electrode active material particles to P contained in the phosphorus compound adhered to the surfaces of the first positive electrode active material particles is 0 or more and 0.5 or less.

### Advantageous Effects of Invention

According to the technique of the present disclosure, an increase in the internal resistance of the battery can be reduced while side reactions in the positive electrode can be suppressed.

### BRIEF DESCRIPTION OF DRAWINGS

FIG. 1 is a cross-sectional view schematically showing the configuration of an example of a positive electrode according to Embodiment 1.
FIG. 2 is a cross-sectional view schematically showing an example of a nonaqueous electrolyte secondary battery according to Embodiment 2.

### DESCRIPTION OF EMBODIMENTS

Embodiments of the present disclosure are described in detail below with reference to the drawings. The present disclosure is not limited to the embodiments described below.

### (Embodiment 1)

A positive electrode according to Embodiment 1 includes first positive electrode active material particles, second positive electrode active material particles, and a phosphorus compound adhered to at least a portion of the surface of the first positive electrode active material particle. The first positive electrode active material particle is a particle formed by agglomeration of 51 to 20,000 first primary particles. The second positive electrode active material particle is one second primary particle or a particle formed by agglomeration of 2 to 50 of the second primary particles. The mass ratio of P contained in a phosphorus compound adhered to the surfaces of the second positive electrode active material particles to P contained in the phosphorus compound adhered to the surfaces of the first positive electrode active material particles is 0 or more and 0.5 or less.

The first positive electrode active material particles, which are particles formed by agglomeration of a large number of primary particles, have conventionally been used in positive electrodes. To further enhance the battery capacity, a study has been conducted on the use of a positive electrode active material having smaller particle diameters in combination so as to fill gaps within the positive electrode. However, as the particle diameter of the first positive electrode active material particles is reduced, the surface area increases, thereby accelerating side reactions and further increasing the amount of gas generated in the positive electrode. The combined use of the positive electrode active material differing only in particle diameter results in a significant increase in the amount of gas generated relative to the increase in capacity, and is thus not preferable. In view of this, the use of the second positive electrode active material particles, as a positive electrode active material having particle diameters capable of filling the gaps within the positive electrode, has been studied. The second positive electrode active material particle is a particle consisting of a single primary particle or a particle formed by agglomeration of a small number of the primary particles. The second positive electrode active material particles as described above, with reduced particle diameters, can suppress gas generation compared with the first positive electrode active material particles; however, due to the fewer grain boundaries between the primary particles, an increase in the internal resistance of the battery is a concern. For the sake of completeness, it should be noted that, by filling the gaps within the positive electrode, namely, gaps between the first positive electrode active material particles, with the second positive electrode active material particles, the battery capacity is enhanced compared with when the second positive electrode active material particles are not included in the positive electrode.

In view of this, the present inventor has studied achieving both suppression of the amount of gas generated in the positive electrode and enhancement of the battery capacity by suppressing side reactions caused by the first positive electrode active material particles and concurrently using the second positive electrode active material particles having particle diameters capable of filling the gaps between the first positive electrode active material particles. To suppress side reactions such as gas generation in the positive electrode, the present inventor has studied coating the positive electrode with a phosphorus compound.

The present inventor has verified the relationship between the battery characteristics and each of the following: the first positive electrode active material particles, the second positive electrode active material particles, and the first positive electrode active material particles having a phosphorus compound adhered to the surfaces. The first positive electrode active material particles used were particles of a lithium nickel manganese oxide (average particle diameter: 17 µm) formed by agglomeration of approximately 4,000 primary particles having an average particle diameter of 1 µm. The second positive electrode active material particles used were particles of a lithium nickel manganese oxide (average particle diameter: 5 µm) formed by agglomeration of four primary particles having an average particle diameter of 3 µm. The phosphorus compound used was tris(trimethylsilyl) phosphate (TMSP). The surface of the first positive electrode active material particle was coated with TMSP by the same procedure described later in Examples of the present disclosure. Respective evaluation cells were fabricated using, as the positive electrode active material, the first positive electrode active material particles, the second positive electrode active material particles, and the first positive electrode active material particles having the phosphorus compound adhered to the surfaces. The evaluation cells were subjected to measurements of the internal resistance and the amount of gas generated. The procedure for fabricating the evaluation cells was the same as the procedure described later in Examples of the present disclosure.

The results of the above verification are as follows. In the battery using only the second positive electrode active material particles, the internal resistance value was at least twice that of the battery using only the first positive electrode active material particles; however, the amount of gas generated after the trickle test was 17% of that of the battery using only the first positive electrode active material particles. In the battery using the first positive electrode active material particles coated with TMSP, the internal resistance value was 1.13 times that of the battery using only the first positive electrode active material particles, while the amount of gas generated after the trickle test was reduced to 56% of that of the battery using only the first positive electrode active material particles.

The positive electrode of the present disclosure is a positive electrode that uses the first positive electrode active material particles and the second positive electrode active material particles in combination, wherein the mass ratio of a phosphorus compound adhered to the surfaces of the second positive electrode active material particles to a phosphorus compound adhered to the surfaces of the first positive electrode active material particles is appropriately adjusted. Therefore, it is possible to suppress side reactions in the positive electrode of the battery and reduce an increase in the internal resistance, and concurrently achieve enhancement of the battery capacity.

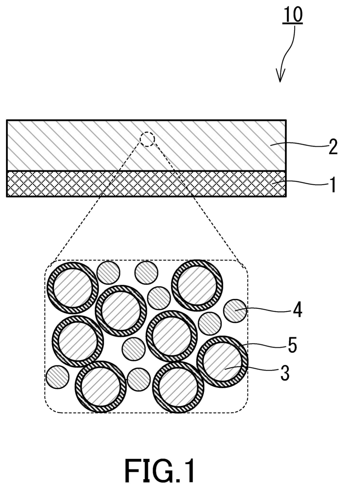

FIG. 1 is a cross-sectional view schematically showing the configuration of an example of a positive electrode according to Embodiment 1. A positive electrode 10 includes a positive electrode current collector 1 and a positive electrode active material layer 2 in this order. The positive electrode active material layer 2 is a layer that includes first positive electrode active material particles 3, second positive electrode active material particles 4, and a phosphorus compound. The positive electrode active material layer 2 is supported on the positive electrode current collector 1. At least a portion of the surface of the first positive electrode active material particle 3 is coated with a coating material 5 that includes a phosphorus compound. The surface of the second positive electrode active material particle 4 may or may not be coated with the coating material 5. The mass ratio of P contained in the phosphorus compound in the coating material 5 coating the surfaces of the second positive electrode active material particles 4 to P contained in the phosphorus compound in the coating material 5 coating the surfaces of the first positive electrode active material particles 3 (mass ratio P2/P1) is 0 or more and 0.5 or less.

The first positive electrode active material particle 3 is a secondary particle formed by agglomeration of 51 to 20,000 first primary particles. The second positive electrode active material particle 4 is one second primary particle or a particle formed by agglomeration of 2 to 50 of the second primary particles.

In the positive electrode 10 according to Embodiment 1, side reactions are suppressed because the phosphorus compound is adhered to at least a portion of the surface of the first positive electrode active material particle 3. Examples of the side reactions that are suppressed include gas generation. It is sufficient that the phosphorus compound be adhered to the surface of the first positive electrode active material particle 3, that is, the surface of the secondary particle. It is not necessary for the phosphorus compound to be adhered to the surface of the first primary particle located within the first positive electrode active material particle 3. Furthermore, in the positive electrode 10, the positive electrode active material layer 2 includes the first positive electrode active material particles 3 and the second positive electrode active material particles 4, and satisfies the above mass ratio of the phosphorus compound. According to the above configuration, an increase in the internal resistance of the battery can be reduced while side reactions in the positive electrode can be suppressed. In particular, side reactions and an increase in the internal resistance that are due to long-term charging of the battery can be suppressed.

The mass ratio P2/P1 is the value determined by the calculation formula: (mass of P contained in the phosphorus compound included in the coating material 5 coating the surfaces of the second positive electrode active material particles 4 in the positive electrode 10)/(mass of P contained in the phosphorus compound included in the coating material 5 coating the surfaces of all of the first positive electrode active material particles 3 in the positive electrode 10). The mass ratio P1/P2 can be determined, for example, by energy dispersive X-ray spectroscopy employing a scanning transmission electron microscope (STEM-EDX) and inductively coupled plasma (ICP) spectrometry. Specifically, the ratio of P coating the surfaces of the first positive electrode active material particles 3 to P coating the surfaces of the second positive electrode active material particles 4 is calculated by cross-sectional STEM-EDX on the positive electrode 10, and the mass of P is then determined by ICP spectrometry. Thus, the mass ratio can be determined.

The mass ratio P2/P1 may be 0 or more and 0.3 or less, 0 or more and 0.2 or less, 0 or more and 0.1 or less, 0 or more and 0.05 or less, or 0 or more and 0.025 or less.

The first positive electrode active material particle 3 is preferably a particle formed by agglomeration of 1,000 to 10,000 first primary particles, and more preferably a particle formed by agglomeration of 2,000 to 5,000 first primary particles.

The average particle diameter of the first primary particles may be 50 nm or more and 5 µm or less, and the average particle diameter of the second primary particles may be 0.5 µm or more and 7 µm or less.

The average particle diameter of the first primary particles may be 100 nm or more and 3 µm or less, or 100 nm or more and less than 2 µm. The average particle diameter of the second primary particles may be 0.5 µm or more and 5 µm or less, or 2 µm or more and 5 µm or less.

The average particle diameter of the first primary particles may be smaller than the average particle diameter of the second primary particles. According to the above configuration, the internal resistance of the battery can be reduced.

The second positive electrode active material particle 4 is preferably one second primary particle or a particle formed by agglomeration of 2 to 5 of the second primary particles.

The crystallinity of the second primary particle may be higher than the crystallinity of the first primary particle. The second primary particle may be a single crystal. The second positive electrode active material particle 4 may be one single-crystal particle.

The average particle diameter of the first primary particles and the average particle diameter of the second primary particles are determined by the following method. A cross section of the positive electrode 10 is observed with a scanning electron microscope (SEM). In the SEM image thus obtained, the first positive electrode active material particles 3 and the second positive electrode active material particles 4 are identified based on the number of primary particles. Among a group of the first primary particles constituting the first positive electrode active material particle 3, particle diameters of any 50 first primary particles are calculated, and the average value is regarded as the average particle diameter of the first primary particles. The same applies to the second primary particles. Among a group of the second primary particles constituting the second positive electrode active material particle 4, particle diameters of any 50 second primary particles are calculated, and the average value is regarded as the average particle diameter of the second primary particles.

The average particle diameter of the first positive electrode active material particles 3 is, for example, 3 µm or more and 20 µm or less, and preferably 6 µm or more and 17 µm or less. The average particle diameter of the second positive electrode active material particles 4 is, for example, 0.5 µm or more and 7 µm or less, and preferably 2 µm or more and 5 µm or less. According to the above configuration, an increase in the internal resistance of the battery can be reduced while side reactions in the positive electrode can be suppressed.

The average particle diameter of the first positive electrode active material particles 3 and the average particle diameter of the second positive electrode active material particles 4 can be determined by laser diffraction scattering employing a commercially available laser diffractometer. For example, laser diffraction scattering is performed on the first positive electrode active material particles 3, which are used as a raw material for forming the positive electrode active material layer 2. Based on the resulting particle size distribution, the average particle diameter of the first positive electrode active material particles 3 can be determined. Here, the average particle diameter is defined as the particle diameter at a cumulative volume equal to 50% in the volumetric particle size distribution. Similarly, laser diffraction scattering is performed on the second positive electrode active material particles 4, which are used as a raw material for forming the positive electrode active material layer 2. Based on the resulting particle size distribution, the average particle diameter of the second positive electrode active material particles 4 can be determined.

The average particle diameter of the first positive electrode active material particles 3 and the average particle diameter of the second positive electrode active material particles 4 may be determined by the following method. In a cross-sectional SEM image of the positive electrode 10, particle diameters (equivalent circle diameters) of any 50 first positive electrode active material particles 3 and particle diameters (equivalent circle diameters) of any 50 second positive electrode active material particles 4 are calculated. The respective average values are regarded as the average particle diameter of the first positive electrode active material particles 3 and the average particle diameter of the second positive electrode active material particles 4.

The average particle diameter of the first positive electrode active material particles 3 may be larger than the average particle diameter of the second positive electrode active material particles 4. The positive electrode 10 may be such that the average particle diameter of the first positive electrode active material particles 3 is larger than the average particle diameter of the second positive electrode active material particles 4, and that the average particle diameter of the first primary particles is smaller than the average particle diameter of the second primary particles.

The average particle diameter of the first positive electrode active material particles 3 may be more than 5 µm and 20 µm or less, or 10 µm or more and 20 µm or less. The average particle diameter of the second positive electrode active material particles 4 may be 0.5 µm or more and 5 µm or less.

The mass ratio of the first positive electrode active material particles 3 to the second positive electrode active material particles 4 (mass ratio A1/A2) may be 0.67 or more and 4.0 or less.

The mass ratio A1/A2 is the value determined by the calculation formula: (total mass of the first positive electrode active material particles 3 in the positive electrode 10)/(total mass of the second positive electrode active material particles 4 in the positive electrode 10). The mass ratio A1/A2 may be 1.5 or more and 4.0 or less, 2.0 or more and 3.8 or less, or 2.5 or more and 3.5 or less. According to the above configuration, an increase in the internal resistance of the battery can be further reduced while side reactions in the positive electrode can be suppressed. Furthermore, the battery capacity and charge and discharge efficiency can also be enhanced.

The mass ratio A1/A2 can be determined, for example, using an SEM and STEM-EDX. The total mass of the first positive electrode active material particles 3 is calculated as the value obtained by multiplying the particle volume of the first positive electrode active material particles 3, the average number of particles of the first positive electrode active material particles 3 per the positive electrode volume, the mass density of the first positive electrode active material particles 3, and the positive electrode volume. The same applies to the total mass of the second positive electrode active material particles 4. The particle volume is calculated from the average particle diameter of the first positive electrode active material particles 3 or the second positive electrode active material particles 4. The average number of particles per the positive electrode volume is calculated from the average number of particles within a predetermined area in the SEM image. The mass density of the positive electrode active material particles is calculated, for example, when an oxide containing Ni and Mn is used as the positive electrode active material particles, from the Ni atomic mass ratio, the Mn atomic mass ratio, and the O atomic mass ratio measured by STEM-EDX. Based on the total mass of the first positive electrode active material particles 3 and the total mass of the second positive electrode active material particles 4 calculated above, the mass ratio A1/A2 is determined.

The first positive electrode active material particles 3 and the second positive electrode active material particles 4 are particles of a positive electrode active material. The positive electrode active material is not particularly limited. Examples of the positive electrode active material include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates. At least one selected from these positive electrode active materials can be used.

The first positive electrode active material particles 3 and the second positive electrode active material particles 4 may be materials having the same composition or may be materials having different compositions.

The coating material 5 includes the phosphorus compound. The coating material 5 may include a material other than the phosphorus compound. The coating material 5 may include only the phosphorus compound, except for unavoidable impurities. The coating material 5 is in contact with the surface of the first positive electrode active material particle 3 to coat the surface. The coating material 5 may form a coating layer coating the surface of the first positive electrode active material particle 3.

The phosphorus compound may include a P=O bond. Examples of the phosphorus compound include phosphoric acid, phosphonic acid, phosphinic acid, pyrophosphoric acid, a phosphate ester, a phosphonate ester, a phosphinate ester, a derivative thereof, and a condensate thereof. The phosphorus compound may be an organophosphorus compound. In the present specification, the term "organophosphorus compound" means a compound containing carbon and phosphorus. The phosphorus compound may be an organophosphorus compound including a carbon-phosphorus bond.

The phosphorus compound may include a P-O-P bond. The phosphorus compound may be polyphosphoric acid, a polyphosphate ester, or a derivative thereof. According to the above configuration, side reactions in the positive electrode can be further suppressed.

The phosphorus compound may include a structure represented by chemical formula (1).

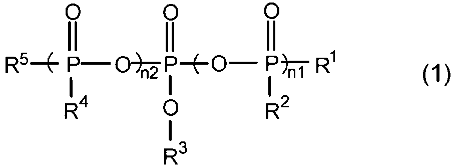

In the chemical formula (1), n1 and n2 are each independently an integer equal to or greater than 0; R¹, R², R⁴, and R⁵ each independently represent -OR or -(CH₂)ₘ₁X1; R³ and R each independently represent a direct bond to the first positive electrode active material particle 3, a hydrogen atom, -(CH₂)ₘ₂X2, a trimethylsilyl group, or a triethylsilyl group; m1 is an integer from 0 to 15; m2 is a natural number from 1 to 3; X1 and X2 each independently represent a hydrogen atom, a hydroxy group, an amino group, a carboxy group, a cyano group, or a fluorine atom; when a plurality of R²s are present, the plurality of R²s are independent of each other; and when a plurality of R⁴s are present, the plurality of R⁴s are independent of each other.

Owing to including such a structure, the phosphorus compound is relatively stable even in a high-voltage environment. Accordingly, even when the upper limit voltage of the secondary battery is high, for example, exceeding 4.3 V, it is possible to sufficiently suppress side reactions such as gas generation. Furthermore, the effect of suppressing side reactions can be sustained for a longer period.

In the chemical formula (1), n1 and n2 each may be independently 1 or greater; at least one selected from the group consisting of n1 and n2 may be 1 or greater; n1 and n2 each may be independently 500 or smaller; X1 may be a hydrogen atom; and X2 may be a hydrogen atom.

In the chemical formula (1), m1 may be an integer from 0 to 11 or an integer from 0 to 6. When m1 is an integer from 0 to 6, side reactions can be further suppressed.

In the chemical formula (1), m2 may be 1 or 2; and R³ may be a direct bond to the first positive electrode active material particle 3.

Examples of the phosphorus compound include a silyl phosphite, phosphonic acid, phosphoric acid, pyrophosphoric acid, and a condensate thereof. The phosphorus compound may be a silyl phosphite, tris(trimethylsilyl) phosphate (TMSP), or a TMSP-derived compound, such as a condensate of TMSP. In the chemical formula (1), R¹, R², R⁴, and R⁵ each may independently represent -OR, and R³ and R each may independently represent a direct bond to the first positive electrode active material particle 3, a hydrogen atom, or a trimethylsilyl group. According to such a configuration, side reactions in the positive electrode of the battery can be further suppressed. Furthermore, an increase in the internal resistance can be further reduced.

The phosphorus compound may be phosphoric acid or a condensate of phosphoric acid. In the chemical formula (1), R¹, R², R⁴, and R⁵ each may independently represent -OR, and R³ and R each may independently represent a direct bond to the first positive electrode active material particle 3 or a hydrogen atom, or each may independently represent a hydrogen atom.

The positive electrode active material layer 2 may include one or two or more phosphorus compounds. That is, the positive electrode 10 may include one or two or more phosphorus compounds.

The phosphorus compound may or may not form a chemical bond to the first positive electrode active material particle 3. The phosphorus compound may be physically adhered to the first positive electrode active material particle 3.

The mass ratio of P contained in the coating material 5 coating the first positive electrode active material particles 3 to the first positive electrode active material particles 3 is, for example, 0.1% or more, and may be 0.14% or more and 0.3% or less, or 0.14% or more and 0.24 mass% or less. When TMSP is added to the electrolyte solution, a sufficient amount of TMSP cannot be used to enhance the characteristics due to the limit of the content of TMSP soluble in the electrolyte solution. When TMSP is added to the electrolyte solution, a TMSP self-coating can be formed on the positive electrode; however, in this case, the mass ratio of P in the coating to the total mass of the positive electrode active material is approximately 0.006 mass%. Furthermore, when TMSP is added to the electrolyte solution, a TMSP self-coating is also formed on the surface of the second positive electrode active material particle 4, increasing the mass ratio P2/P1. This can act as a resistive component. Accordingly, the addition of TMSP is not preferable.

At least a portion of the surface of the second positive electrode active material particle 4 may be coated with the coating material 5, but is preferably not coated with the coating material 5. When at least a portion of the surface of the second positive electrode active material particle 4 is coated with the coating material 5, the mass ratio of P contained in the coating material 5 coating the second positive electrode active material particles 4 to the second positive electrode active material particles 4 is, for example, 0.01% or less, and may be 0.006% or less. The phosphorus compound adhered to the surfaces of the first positive electrode active material particles 3 and the phosphorus compound adhered to the second positive electrode active material particles 4 may have the same composition or may have different compositions.

The positive electrode active material layer 2 may include other materials such as a conductive additive, an ion conductor, and a binder.

The conductive additive and the ion conductor are used to reduce the resistance of the electrode. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. At least one selected from these conductive additives can be used.

Examples of the ion conductor include gel electrolytes such as polymethyl methacrylate and polymethacrylic acid methyl ester, organic solid electrolytes such as polyethylene oxide, and inorganic solid electrolytes such as Li₇La₃Zr₂O₁₂. At least one selected from these ion conductors can be used.

The binder is used to enhance the binding properties of the materials constituting the electrode. Examples of the binder include polymer materials, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The positive electrode current collector 1 is, for example, a sheet or film formed of a metal material such as aluminum, an aluminum alloy, stainless steel, titanium, or a titanium alloy. The sheet or film may be porous or non-porous. The sheet or film is metal foil, metal mesh, or the like. A carbon material as a conductive auxiliary material may be applied to the surface of the positive electrode current collector 1.

The positive electrode 10 according to Embodiment 1 can be manufactured, for example, by the following method.

The first positive electrode active material particles 3 and the second positive electrode active material particles 4 are prepared. The surfaces of the first positive electrode active material particles 3 are coated with the coating material 5 including the phosphorus compound. The coating means is not particularly limited, and the coating is performed, for example, by the following procedure.

Next, a solution including a phosphorus compound and a solvent is prepared.

As described above, the phosphorus compound includes the structure represented by the chemical formula (1). The phosphorus compound in the raw material stage refers to a compound in a state before condensation with other phosphorus compounds and/or bonding to the positive electrode active material can occur, and thus can be distinguished from the phosphorus compound contained in the positive electrode active material layer 2. The phosphorus compound in the raw material stage includes, for example, a structure represented by chemical formula (2).

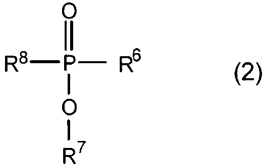

In the chemical formula (2), R⁷ represents a hydrogen atom, -(CH₂)ₖ₁Y1, a trimethylsilyl group, or a triethylsilyl group; R⁶ and R⁸ each independently represent -OR or -(CH₂)ₖ₂Y2; R represents a hydrogen atom, -(CH₂)ₖ₃Y3, a trimethylsilyl group, or a triethylsilyl group; k1 and k3 are each independently a natural number from 1 to 3; k2 is an integer from 0 to 15; and Y1, Y2, and Y3 each independently represent a hydrogen atom, a hydroxy group, an amino group, a carboxy group, a cyano group, or a fluorine atom.

The phosphorus compound in the raw material stage may include at least one selected from the group consisting of a silyl phosphite and phosphoric acid. The silyl phosphite may be TMSP.

As the solvent, a cyclic carbonate, a chain carbonate, a cyclic carboxylate, or the like is used. Examples of cyclic carbonates include propylene carbonate (PC). Examples of chain carbonates include diethyl carbonate (DEC), ethyl methyl carbonate (EMC), and dimethyl carbonate (DMC). Examples of cyclic carboxylates include Y-butyrolactone (GBL) and y-valerolactone (GVL). One solvent may be used alone, or two or more solvents may be used in combination.

The concentration of the phosphorus compound in the solution may be 0.1 mass% to 20 mass%.

Next, the prepared solution is brought into contact with the first positive electrode active material particles 3. The bringing the solution into contact may be performed by immersing the above particles in the solution or by applying the solution to the above particles by spraying or the like. For example, the solution may be brought into contact with the positive electrode active material particles by forming the positive electrode active material including the above particles into a layer and either applying the solution onto the layer or impregnating the layer with the solution. The contact time with the solution is, for example, 15 minutes or more and 120 minutes or less, and the temperature is, for example, 20°C or more and 60°C or less.

The positive electrode active material particles brought into contact with the solution are vacuum dried. The vacuum drying time may be, for example, 5 minutes or more and 48 hours or less. Thus, the first positive electrode active material particles 3, the surface of each of which is at least partially coated with the coating material 5 including the phosphorus compound, are obtained. Vacuum drying means drying under a pressure lower than atmospheric pressure.

After the bringing the solution into contact and before the vacuum drying, the first positive electrode active material particles 3 may be washed. For example, a solvent is used for the washing. The solvent used for the washing may be the same solvent as that used in the above solution including the phosphorus compound and the solvent, and may be, for example, DMC. According to the above, by-products such as decomposition products of the phosphorus compound can be removed. Consequently, gas generation in the positive electrode due to reactions between the by-products and the electrolyte can be suppressed.

Next, a positive electrode slurry is prepared that includes the first positive electrode active material particles 3, the surface of each of which is at least partially coated with the coating material 5 including the phosphorus compound obtained above, and the second positive electrode active material particles 4. For example, the positive electrode active material particles, a binder, and a conductive additive are dispersed in a dispersion medium to prepare the positive electrode slurry.

The positive electrode slurry is applied to the positive electrode current collector 1 to form the positive electrode active material layer 2. Specifically, a coating film is formed by applying the positive electrode slurry to the positive electrode current collector 1. The dispersion medium is removed from the coating film, and the positive electrode active material layer 2 is thus obtained. An example of a method for removing the dispersion medium is heating the coating film. An example of the dispersion medium is N-methyl-2-pyrrolidone (NMP).

Thus, the positive electrode 10 according to Embodiment 1 is obtained.

### (Embodiment 2)

A nonaqueous electrolyte secondary battery according to Embodiment 2 includes the positive electrode according to Embodiment 1, a negative electrode, and an electrolyte. By using the positive electrode according to Embodiment 1, the characteristics of the nonaqueous electrolyte secondary battery can be improved.

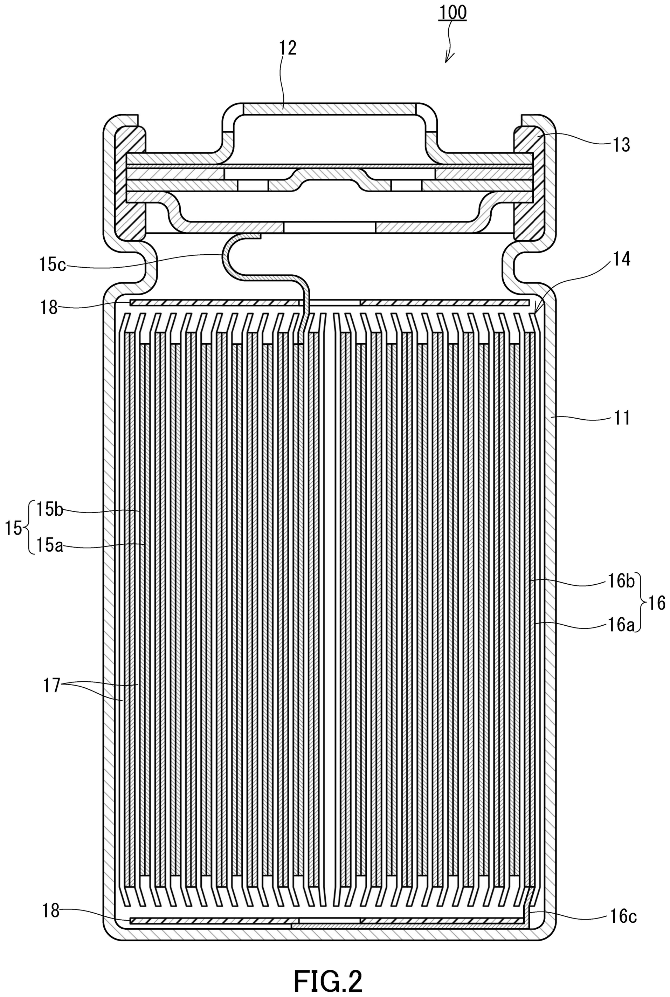

FIG. 2 is a cross-sectional view schematically showing an example of the nonaqueous electrolyte secondary battery according to Embodiment 2. A secondary battery 100 includes a container 11 and an electrode group 14. The electrode group 14 has a wound structure. The electrode group 14 is housed in the container 11. The electrode group 14 includes a positive electrode 15, a negative electrode 16, and a pair of separators 17. The electrode group 14 is impregnated with an electrolyte solution. The opening of the container 11 is sealed with a sealing plate 12. The positive electrode 15 includes a positive electrode current collector 15a and a positive electrode active material layer 15b. To the positive electrode 15, one end of a positive electrode lead 15c is connected. The other end of the positive electrode lead 15c is connected to the back surface of the sealing plate 12. An insulating packing 13 is disposed to surround the sealing plate 12. The negative electrode 16 includes a negative electrode current collector 16a and a negative electrode active material layer 16b. To the negative electrode 16, one end of a negative electrode lead 16c is connected. The other end of the negative electrode lead 16c is connected to the bottom surface of the container 11. An insulating ring 18 is disposed on each of the upper and lower surfaces of the electrode group 14.

The constituent elements of the secondary battery 100 are described in detail below.

The positive electrode 15 is the positive electrode according to Embodiment 1.

The negative electrode current collector 16a can be a sheet or film formed of a metal material such as stainless steel, nickel, copper, or an alloy of any of these. The sheet or film may be porous or non-porous. The sheet or film is metal foil, metal mesh, or the like. A carbon material, such as carbon, as a conductive auxiliary material may be applied to the surface of the negative electrode current collector 16a.

The negative electrode active material layer 16b includes a negative electrode active material. The negative electrode active material can be a material capable of occluding and releasing lithium ions. The negative electrode active material includes, for example, at least one selected from the group consisting of a carbon material and a material capable of forming an alloy with lithium. An example of the carbon material is graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 16b may include, as the negative electrode active material, at least one selected from the group consisting of graphite and silicon. The negative electrode active material layer 16b may include only graphite as the negative electrode active material. Graphite is recommended because graphite is less susceptible to deterioration even after repeated charging and discharging at deep depths. A carbon material other than graphite may be used as the negative electrode active material. Silicon exhibits higher capacity than graphite and is accordingly advantageous for increasing the capacity of the secondary battery 100.

The negative electrode active material layer 16b may include other materials such as a conductive additive, an ion conductor, and a binder. The materials that can be used as the conductive additive, the ion conductor, and the binder in the positive electrode active material layer 15b can also be used in the negative electrode active material layer 16b.

The electrolyte solution is a nonaqueous electrolyte impregnated in the positive electrode 15, the negative electrode 16, and the separator 17. The electrolyte solution may fill the interior space of the container 11. The action of the electrolyte solution allows lithium ions to migrate between the positive electrode 15 and the negative electrode 16.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the concentration of the lithium salt within the above range, an electrolyte solution having excellent ionic conductivity and moderate viscosity can be obtained. However, the concentration of the lithium salt is not limited to the above range.

The nonaqueous solvent can be a cyclic carbonate, a chain carbonate, a cyclic ether, a chain ether, a cyclic ester, a chain ester, a fluorinated solvent, a nitrile, or the like. Examples of cyclic carbonates include ethylene carbonate, propylene carbonate, and butylene carbonate. Examples of chain carbonates include dimethyl carbonate, ethyl methyl carbonate, and diethyl carbonate. Examples of cyclic ethers include tetrahydrofuran, 1,4-dioxane, and 1,3-dioxolane. Examples of chain ethers include 1,2-dimethoxyethane and 1,2-diethoxyethane. Examples of cyclic esters include y-butyrolactone. Examples of chain esters include methyl acetate. Examples of fluorinated solvents include fluoroethylene carbonate, methyl fluoropropionate, fluorobenzene, fluoroethylmethyl carbonate, and fluorodimethylene carbonate. Examples of nitriles include acetonitrile. At least one selected from these nonaqueous solvents can be used.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more selected from these electrolyte salts may be used in combination.

The separator 17 has lithium-ion conductivity. The material of the separator 17 may be any material through which lithium ions are allowed to pass. The material of the separator 17 can be at least one selected from the group consisting of a gel electrolyte, an ion exchange resin membrane, a semipermeable membrane, and a porous membrane. When the separator 17 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by weaving glass fibers into a nonwoven fabric.

The container 11 is, for example, a container made of a metal such as aluminum or stainless steel. The container 11 may have a cylindrical shape or a prismatic shape.

The electrode group 14 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 2 is described. In this configuration example, a secondary battery includes an electrode group, in which a positive electrode and a negative electrode are wound with a separator interposed therebetween, and an electrolyte solution, both of which are housed in an exterior body. However, the secondary battery according to the present disclosure is not limited to this configuration example. The secondary battery according to the present disclosure may be in any form such as a cylindrical type, a prismatic type, a coin type, a button type, or a laminated type. Furthermore, as the electrode group in the secondary battery according to the present disclosure, the wound-type electrode group may be replaced with any other type of electrode group such as a stacked-type electrode group in which a positive electrode and a negative electrode are stacked with a separator interposed therebetween.

The application of the positive electrode of the present disclosure is not limited to the secondary battery 100. The positive electrode of the present disclosure can be applied to various secondary batteries in addition to lithium secondary batteries, such as sodium secondary batteries and magnesium secondary batteries.

### (Other Embodiments)

### (Supplementary Description)

The above description of the embodiments discloses the following techniques.

### (Technique 1)

A positive electrode including:
first positive electrode active material particles;
second positive electrode active material particles; and
a phosphorus compound adhered to at least a portion of a surface of the first positive electrode active material particle, wherein
the first positive electrode active material particle is a particle formed by agglomeration of 51 to 20,000 first primary particles,
the second positive electrode active material particle is one second primary particle or a particle formed by agglomeration of 2 to 50 of the second primary particles, and
a mass ratio of P contained in a phosphorus compound adhered to surfaces of the second positive electrode active material particles to P contained in the phosphorus compound adhered to the surfaces of the first positive electrode active material particles is 0 or more and 0.5 or less.

According to this configuration, an increase in the internal resistance of the battery can be reduced while side reactions in the positive electrode can be suppressed.

### (Technique 2)

The positive electrode according to Technique 1, wherein an average particle diameter of the first primary particles is 50 nm or more and 5 µm or less, and an average particle diameter of the second primary particles is 0.5 µm or more and 7 µm or less. According to such a configuration, an increase in the internal resistance of the battery can be reduced while side reactions in the positive electrode can be suppressed.

### (Technique 3)

The positive electrode according to Technique 1 or 2, wherein an average particle diameter of the first positive electrode active material particles is 3 µm or more and 20 µm or less, and an average particle diameter of the second positive electrode active material particles is 0.5 µm or more and 7 µm or less. According to such a configuration, an increase in the internal resistance of the battery can be reduced while side reactions in the positive electrode can be suppressed.

### (Technique 4)

The positive electrode according to any one of Techniques 1 to 3, wherein an average particle diameter of the first primary particles is smaller than an average particle diameter of the second primary particles. According to such a configuration, an increase in the internal resistance of the battery can be reduced while side reactions in the positive electrode can be suppressed.

### (Technique 5)

The positive electrode according to any one of Techniques 1 to 4, wherein the second positive electrode active material particle is one single-crystal particle. According to such a configuration, an increase in the internal resistance of the battery can be reduced while side reactions in the positive electrode can be suppressed.

### (Technique 6)

The positive electrode according to any one of Techniques 1 to 5, wherein an average particle diameter of the first positive electrode active material particles is larger than an average particle diameter of the second positive electrode active material particles. According to such a configuration, an increase in the internal resistance of the battery can be reduced while side reactions in the positive electrode can be suppressed. Furthermore, the second positive electrode active material particles can be disposed so as to fill gaps between the first positive electrode active material particles, thereby enhancing the battery capacity.

### (Technique 7)

The positive electrode according to any one of Techniques 1 to 6, wherein an average particle diameter of the first positive electrode active material particles is larger than an average particle diameter of the second positive electrode active material particles, and an average particle diameter of the first primary particles is smaller than an average particle diameter of the second primary particles. According to such a configuration, an increase in the internal resistance of the battery can be further reduced while side reactions in the positive electrode can be suppressed. Furthermore, the second positive electrode active material particles can be disposed so as to fill gaps between the first positive electrode active material particles, thereby enhancing the battery capacity.

### (Technique 8)

The positive electrode according to any one of Techniques 1 to 7, wherein a mass ratio of the first positive electrode active material particles to the second positive electrode active material particles is 0.67 or more and 4.0 or less. According to such a configuration, an increase in the internal resistance of the battery can be further reduced while side reactions in the positive electrode can be suppressed. Furthermore, the battery capacity and charge and discharge efficiency can also be enhanced.

### (Technique 9)

The positive electrode according to any one of Techniques 1 to 8, wherein the phosphorus compound includes a P-O-P bond. According to such a configuration, side reactions in the positive electrode can be further suppressed.

### (Technique 10)

The positive electrode according to any one of Techniques 1 to 9, wherein the phosphorus compound includes a structure represented by chemical formula (1). According to such a configuration, owing to including such a structure, the phosphorus compound is relatively stable even in a high-voltage environment. Accordingly, even when the upper limit voltage of the battery is high, it is possible to sufficiently suppress side reactions in the positive electrode. Furthermore, the effect of suppressing side reactions can be sustained for a longer period.

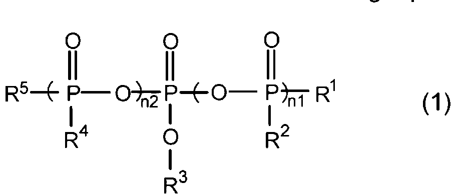

In the chemical formula (1), n1 and n2 are each independently an integer equal to or greater than 0,
R¹, R², R⁴, and R⁵ each independently represent -OR or -(CH₂)ₘ₁X1,
R³ and R each independently represent a direct bond to the first positive electrode active material particle, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

### (Technique 11)

The positive electrode according to Technique 10, wherein in the chemical formula (1), R¹, R², R⁴, and R⁵ each independently represent -OR, and R³ and R each independently represent a direct bond to the first positive electrode active material particle, a hydrogen atom, or a trimethylsilyl group. According to such a configuration, side reactions in the positive electrode of the battery can be further suppressed. Furthermore, an increase in the internal resistance can be further reduced.

### (Technique 12)

A nonaqueous electrolyte secondary battery including:
the positive electrode according to any one of Techniques 1 to 11;
a negative electrode; and
an electrolyte.

According to this configuration, the characteristics of the nonaqueous electrolyte secondary battery can be enhanced.

### Examples

The present disclosure is described in more detail below with reference to examples. The following examples are merely illustrative of one embodiment and are not intended to limit the present disclosure.

### (Example 1)

A solvent composed primarily of dimethyl carbonate (DMC) as the main component was mixed with tris(trimethylsilyl) phosphate (TMSP) to prepare a TMSP solution. The concentration of TMSP in the TMSP solution was adjusted to 2 mass%.

As the first positive electrode active material particles, particles of a lithium nickel manganese oxide (average particle diameter: 17 µm) were prepared. This particle was formed by agglomeration of approximately 4,000 primary particles having an average particle diameter of 1 µm. The lithium nickel manganese oxide was a layered Li-containing oxide having an atomic ratio of Ni:Mn = 8:2. An amount of 4 g of the first positive electrode active material particles was immersed in the TMSP solution, followed by stirring at room temperature for 1 hour. After the stirring, the first positive electrode active material particles were collected by filtration. The first positive electrode active material particles thus collected were added to the above solvent composed primarily of DMC, followed by stirring for 5 minutes. The solvent was then removed by filtration. Thus, the first positive electrode active material particles were washed. The washing was repeated twice, and the first positive electrode active material particles were then vacuum dried at 60°C for 10 hours. Thus, the surface of the first positive electrode active material particle was coated with the phosphorus compound.

As the second positive electrode active material particles, particles of a lithium nickel manganese oxide (average particle diameter: 5 µm) were prepared. This particle was formed by agglomeration of four primary particles having an average particle diameter of 3 µm. The composition of the lithium nickel manganese oxide was the same as the composition of the first positive electrode active material particles. The first positive electrode active material particles having coated surfaces, the second positive electrode active material particles, acetylene black (AB), and polyvinylidene fluoride (PVDF) were stirred with the addition of N-methyl-2-pyrrolidone (NMP) to prepare a positive electrode slurry. The mass ratio of the first positive electrode active material particles to the second positive electrode active material particles was set to 2.5:1. Furthermore, the mass ratio of these materials in the positive electrode active material layer was positive electrode active material:AB:PVDF = 96:2:2.

The positive electrode slurry was applied to the surface of an aluminum foil (1.45 cm × 1.45 cm), the resulting coating film was dried, and then rolled to form the positive electrode active material layer. Thus, the positive electrode of Example 1 was obtained. The mass ratio of the phosphorus compound coating the surfaces of the second positive electrode active material particles to the phosphorus compound coating the surfaces of the first positive electrode active material particles was 0.

The evaluation cell of Example 1 was fabricated using the positive electrode of Example 1, a Li metal foil as the counter electrode, a separator, and an electrolyte solution. The separator used was a PP/PE/PP three-layer resin separator. The concentration of LiPF₆ in the electrolyte solution was 1.3 mol/L. The solvent for the electrolyte solution was a solvent mixture composed of fluoroethylene carbonate (FEC), ethylene carbonate (EC), and DMC mixed in a volume ratio of FEC:EC:DMC = 5:20:75.

### (Reference Example 1)

The positive electrode of Reference Example 1 was fabricated in the same manner as in Example 1, except that the surface of the first positive electrode active material particle was not coated with the phosphorus compound. The evaluation cell of Reference Example 1 was fabricated using the positive electrode of Reference Example 1, in the same manner as in Example 1.

### (Reference Example 2)

The surface of the second positive electrode active material particle was coated with the phosphorus compound in the same manner as in the first positive electrode active material particle of Example 1. The positive electrode of Reference Example 2 was fabricated in the same manner as in Example 1, except that the second positive electrode active material particles having coated surfaces were used. The evaluation cell of Reference Example 2 was fabricated using the positive electrode of Reference Example 2, in the same manner as in Example 1.

### (Reference Example 3)

The surface of the first positive electrode active material particle was not coated with the phosphorus compound. Furthermore, the surface of the second positive electrode active material particle was coated with the phosphorus compound in the same manner as in the first positive electrode active material particle of Example 1. The positive electrode of Reference Example 3 was fabricated in the same manner as in Example 1, except that the first positive electrode active material particles, the surface of each of which was not coated with the phosphorus compound, and the second positive electrode active material particles, the surface of each of which was coated with the phosphorus compound, were used. The evaluation cell of Reference Example 3 was fabricated using the positive electrode of Reference Example 3, in the same manner as in Example 1.

### [Evaluation of Battery]

The evaluation cells of Example 1 and Reference Examples 1 to 3 were subjected to two repeated charge and discharge cycles at an ambient temperature of 25°C, in which a constant-current charge was performed at a current value of 0.1C until the voltage reached 4.5 V and a constant-current discharge was performed at a current value of 0.1C until the voltage reached 2.5 V. Here, the current value at which the time required to reach the lower limit voltage from the upper limit voltage during the constant-current discharge is 1 hour is defined as 1C. Subsequently, a trickle test was conducted by the following procedure. A trickle charge was performed in which a constant-current charge was performed at a current value of 0.2C until the voltage reached 4.5 V, and then the voltage of 4.5 V was maintained for 3 days at an ambient temperature of 55°C. Subsequently, a discharge was performed at a current value of 0.1C at an ambient temperature of 25°C.

The evaluation results are shown in Table 1. The internal resistance is expressed as a relative value based on 100% of the internal resistance of Reference Example 1, and was calculated from the discharge curve at the initial charge and discharge cycle. The amount of gas generated is the amount of gas generated in the battery in the trickle test, and was calculated as {(volume of battery after trickle test) - (volume of battery before trickle test)}/(mass of positive electrode active material). Relative values based on 100% of the amount of gas generated in Example 1 are shown in Table 1. The mass of the positive electrode active material is the sum of the masses of the first positive electrode active material particles and the second positive electrode active material particles.

**[Table 1]**

| | Phosphorus compound | First positive electrode active material particle | Second positive electrode active material particle | Internal resistance (%) | Amount of gas generated |
|---|---|---|---|---|---|
| Example 1 | TMSP | Coated | Uncoated | 114.0 | 100% |
| Reference Example 1 | - | Uncoated | Uncoated | 100.0 | 230% |
| Reference Example 2 | TMSP | Coated | Coated | 119.4 | 100% |
| Reference Example 3 | TMSP | Uncoated | Coated | 116.7 | 150% |

### (Discussion)

Table 1 indicates that in Example 1, the amount of gas generated was suppressed to half or less relative to that in Reference Example 1. In Reference Example 2, the amount of gas generated was suppressed compared with that in Reference Example 1; however, the internal resistance increased significantly compared with that in Example 1. In Example 1, the amount of gas generated was suppressed to an extent comparable to that in Reference Example 2, while the increment in the internal resistance was reduced by approximately 30% relative to that in Reference Example 2. In Example 1, the amount of gas generated was suppressed and the increase in the internal resistance was also suppressed compared with those in Reference Example 3. From the above, the positive electrode of the present disclosure can significantly suppress side reactions in the positive electrode without significantly increasing the internal resistance.

### INDUSTRIAL APPLICABILITY

The technique of the present disclosure is useful, for example, in lithium-ion secondary batteries.

## Claims

1. A positive electrode comprising:
first positive electrode active material particles;
second positive electrode active material particles; and
a phosphorus compound adhered to at least a portion of a surface of the first positive electrode active material particle, wherein
the first positive electrode active material particle is a particle formed by agglomeration of 51 to 20,000 first primary particles,
the second positive electrode active material particle is one second primary particle or a particle formed by agglomeration of 2 to 50 of the second primary particles, and
a mass ratio of P contained in a phosphorus compound adhered to surfaces of the second positive electrode active material particles to P contained in the phosphorus compound adhered to the surfaces of the first positive electrode active material particles is 0 or more and 0.5 or less.

2. The positive electrode according to claim 1, wherein
an average particle diameter of the first primary particles is 50 nm or more and 5 µm or less, and
an average particle diameter of the second primary particles is 0.5 µm or more and 7 µm or less.

3. The positive electrode according to claim 1, wherein
an average particle diameter of the first positive electrode active material particles is 3 µm or more and 20 µm or less, and
an average particle diameter of the second positive electrode active material particles is 0.5 µm or more and 7 µm or less.

4. The positive electrode according to claim 1, wherein
an average particle diameter of the first primary particles is smaller than an average particle diameter of the second primary particles.

5. The positive electrode according to claim 1, wherein
the second positive electrode active material particle is one single-crystal particle.

6. The positive electrode according to claim 1, wherein
an average particle diameter of the first positive electrode active material particles is larger than an average particle diameter of the second positive electrode active material particles.

7. The positive electrode according to claim 1, wherein
an average particle diameter of the first positive electrode active material particles is larger than an average particle diameter of the second positive electrode active material particles, and an average particle diameter of the first primary particles is smaller than an average particle diameter of the second primary particles.

8. The positive electrode according to claim 1, wherein
a mass ratio of the first positive electrode active material particles to the second positive electrode active material particles is 0.67 or more and 4.0 or less.

9. The positive electrode according to claim 1, wherein
the phosphorus compound comprises a P-O-P bond.

10. The positive electrode according to claim 1, wherein
the phosphorus compound comprises a structure represented by chemical formula (1): 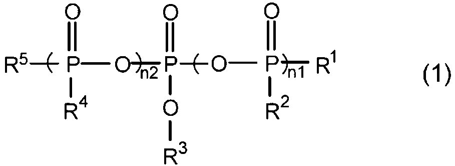
where n1 and n2 are each independently an integer equal to or greater than 0,
R¹, R², R⁴, and R⁵ each independently represent -OR or -(CH₂)ₘ₁X1,
R³ and R each independently represent a direct bond to the first positive electrode active material particle, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

11. The positive electrode according to claim 10, wherein
in the chemical formula (1), R¹, R², R⁴, and R⁵ each independently represent - OR, and
R³ and R each independently represent a direct bond to the first positive electrode active material particle, a hydrogen atom, or a trimethylsilyl group.

12. A nonaqueous electrolyte secondary battery comprising:
the positive electrode according to any one of claims 1 to 11;
a negative electrode; and
an electrolyte.
